# EUROPÄISCHE PATENTSCHRIFT

(11) **EP 2 490 884 B1**
(45) Veröffentlichungstag und Bekanntmachung des Hinweises auf die Patenterteilung: **24.06.2015**
(21) Anmeldenummer: 10744663.5
(22) Anmeldetag: 09.07.2010
(51) Int. Cl.: B29D 23/20, B29C 47/02, B29C 53/38, B29C 53/40, F16L 11/08, B65D 35/02, B31B 3/26, B32B 1/08

(54) **VERFAHREN ZUM HERSTELLEN VON PACKMITTELN, INSBESONDERE TUBEN SOWIE PACKMITTEL**
METHOD FOR PRODUCING PACKAGING, IN PARTICULAR TUBES, AND PACKAGING
PROCÉDÉ DE FABRICATION D'EMBALLAGES, EN PARTICULIER DE TUBES, ET EMBALLAGES AINSI OBTENUS

(30) Priorität: 21.10.2009 DE 102009050278; 28.10.2009 DE 102009051071
(43) Veröffentlichungstag der Anmeldung: 29.08.2012
(73) Patentinhaber: Linhardt GmbH & Co. KG, 94234 Viechtach (DE)
(72) Erfinder: BEIL, Johann, 93462 Lam (DE)
(74) Vertreter: Graf Glück Kritzenberger
(86) Internationale Anmeldenummer: PCT/DE2010/000806
(87) Internationale Veröffentlichungsnummer: WO 2011/047646

(56) Entgegenhaltungen:
- EP-A1- 1 208 962
- DE-A1- 3 510 956
- DE-A1-102006 006 993
- FR-A1- 2 908 345

## Beschreibung

Die Erfindung bezieht sich auf ein Verfahren gemäß Oberbegriff Patentanspruch 1 sowie auf Packmittel, insbesondere in Form von Tuben gemäß Oberbegriff Patentanspruch 12.

Es ist bekannt (DE 35 10 956 A1, FR 2 908 345 A1), Tuben aus einem ein- oder mehrlagigen bahn- oder streifenförmigen Ausgangs- oder Flachmaterial dadurch herzustellen, dass dieses beispielsweise von einer Vorratsspule abgezogene Flachmaterial um wenigstens eine Achse parallel zur Materiallängsrichtung zu einem schlauchartigen Formkörper zusammengerollt und dabei die beiden Längsseiten des Flachmaterials miteinander verbunden werden, sodass ein schlauchartiger Formkörper erhalten wird. Die Verbindung kann überlappend (FR 2 908 345 A1), bevorzugt auch stumpf erfolgen (DE 35 10 956 A1), und zwar jeweils durch Verschweißen. Die stumpfe Verbindung ist speziell so ausgeführt, dass auch bei einem mehrlagigen Flach- oder Ausgangsmaterial nach dem Verbinden jede Lage an der Verbindungs- oder Schweißnaht mit sich selbst verbunden ist. Speziell bei der stumpfen Verbindung ist es weiterhin üblich, die Verbindungs- oder Schweißnaht an der Außenseite des schlauchartigen Formkörpers mit einem überlappenden Folienstreifen zu überdecken. Ein grundsätzlicher Vorteil der stumpfen Verbindung besteht u.a. darin, dass bei einem mehrschichtigen Aufbau die Funktion der einzelnen Schichten, beispielsweise die Funktion einer Sperrschicht auch im Bereich der Verbindungs- oder Schweißnaht zumindest weitestgehend erhalten bleibt. Nachteilig ist aber, dass die stumpfe Verbindung jeweils nur auf sehr kleinen Flächenbereichen erfolgen kann und daher nur begrenzt belastbar ist.

Bekannt sind weiterhin Verfahren zum Herstellen eines schlauchförmigen Kunststoffverbundes (DE 10 2006 006 993 A1), bei denen auf ein durch Extrudieren hergestelltes Rohr aus Kunststoff eine äußere Kunststofffolie aufgebracht wird, und zwar beispielsweise in der Form, dass diese Kunststofffolie das Rohr vollständig umschließt und die Ränder der Kunststofffolie miteinander stumpf oder aber überlappend verbunden sind.

Bekannt ist weiterhin ein Verfahren zur kontinuierlichen Herstellung eines wenigstens drei Lagen aufweisenden Isolierschlauchs in Form eines rohrförmiges Dämm-Materials (EP 1 208 962 A!). Bei der Herstellung wird zunächst ein Schlauchkörper aus einem Wärme isolierenden Schaumstoff extrudiert, der dann anschließend axial geschnitten und zu einer Platte ausgebreitet wird. Auf die Innenseite der Platte wird ein Gleitmaterial aufgebracht und die Platte dann erneut in eine Schlauchform zurückgeführt, wobei die Schnittflächen des so gebildeten Schlauchkörpers miteinander verbunden werden. Auf die Außenseite des Schlauchkörpers aus dem Wärme isolierenden Schaumstoff wird eine nahtlose Ummantelungsschicht aufgebracht. Dieses bekannte Verfahren betrifft ebenfalls nicht die Herstellung von Packmittel in Form von Tuben.

Aufgabe der Erfindung ist es, ein Verfahren aufzuzeigen, welches die vorgenannten Nachteile vermeidet und eine rationelle Herstellung von Packmitteln, insbesondere von Tuben mit erhöhter mechanischer Belastbarkeit ermöglicht. Zur Lösung dieser Aufgabe ist ein Verfahren entsprechend dem Patentanspruch 1 ausgebildet. Ein Packmittel ist Gegenstand des Patentanspruchs 12.

Die Wandung 7 des flexiblen schlauch- oder rohrartigen Tubenkörpers 5 ist mehrlagig ausgeführt, und zwar bei der dargestellten Ausführungsform vierlagig mit einer Lage oder Schicht 7.1, mit einer auf die Schicht 7.1 folgenden Lage oder Schicht 7.2, mit einer auf die Schicht 7.2 folgenden Lage oder Schicht 7.3 und mit einer auf die Schicht 7.3 folgenden Lage oder Schicht 7.4. Die vorgenannte Schicht 7.1 - 7.4 schließen in der angegebenen Reihenfolge von der Innenseite der Tubenwand 7 in Richtung zur Außenseite der Tubenwand 7 aneinander an, wobei die Schicht 7.1 die Innenfläche und die Schicht 7.4 die Außenfläche des Tubenkörper 5 bilden.

Jeweils in Abhängigkeit von der Funktion der Schichten 7.1 - 7.4 bestehen diese aus unterschiedlichsten Materialen, wobei die Schichten 7.1, 7.3 und 7.4 bevorzugt aus Kunststoff gefertigt sind und die vorzugsweise als Sperrschicht dienende Schicht 7.2 aus einem metallischen Material, beispielsweise aus Aluminium oder aber aus einem als Sperrschicht geeigneten Kunststoff, beispielsweise aus EVOH. Um die flächige Verbindung zwischen den einzelnen Schichten herzustellen, sind noch Zwischenschichten aus einem Haftvermittler oder Kleber vorgesehen, und zwar insbesondere zwischen der Schicht 7.2 und den angrenzenden Schichten 7.1 und 7.3.

Zumindest für die innere Schicht 7.1 ist ein für das in die Tube 1 abzufüllende Produkt neutrales Kunststoffmaterial gewählt, d.h. ein Kunststoffmaterial, welches die Qualität und/oder Eigenschaften und/oder Haltbarkeit des die Tube 1 abgefüllten Produktes nicht beeinträchtigt. Weiterhin kann die Schicht 7.1 auch als funktionale Innenschicht ausgeführt sein, beispielsweise als Schicht mit keimtötenden und/oder konservierenden und/oder eine Oxidation des in die Tube abgefüllten Produktes verhindernden Zusätzen usw. Zwischen den Schichten 7.1 und 7.2 kann eine funktionale Zwischenschicht, beispielsweise eine Sauerstoff aufnehmende oder absorbierende Zwischenschicht vorgesehen sein, die bei gefüllter Tube durch die Schicht 7.1 zwar vom Produkt getrennt ist, aber durch die Schicht 7.1 hindurchwirkt.

Beispiele für die Materialwahl der einzelnen Schichten 7.1 - 7.4 und deren Funktionen sind in der nachstehenden Tabelle für verschiedene Schichtfolgen A - D zusammengefasst.

| Schichtfolge | A | B | C | D |
|---|---|---|---|---|
| Schicht 7.1 | PE | PP | PE | funktionale Schicht |
| Funktionale Zwischenschicht | nein | nein | ja | nein |
| Schicht 7.2 | Aluminium oder EVOH | Aluminium oder EVOH | Aluminium oder EVOH | Aluminium oder EVOH |
| Schicht 7.3 | PE | PE | PE | PE |
| Schicht 7.4 | PE | PE | PE | PE |

Die Schicht 7.4 weist beispielsweise eine Dicke im Bereich zwischen 20 µm und 300 µm auf.

Die Tube 1 bzw. deren Tubenkörper 5 sind in der üblichen Weise dekoriert, d.h. mit einer Ausstattung versehen, die beispielsweise durch Bedrucken oder auf andere geeignete Weise auf die Außenseite der Schicht 7.4 aufgebracht ist, oder aber auf die der Schicht 7.4 benachbarte Fläche der Schicht 7.3, wobei die Schicht 7.4 dann eine transparente Deckschicht ist, durch die Ausstattung bzw. der Aufdruck auf der der Schicht 7.3 sichtbar bleibt.

Die Herstellung des Tubenkörpers 5 erfolgt unter Verwendung eines die Schichten 7.1 - 7.3 aufweisenden streiten- oder bahnförmigen Folienverbundmaterials oder Ausgangs- oder Flachmaterial 8 (Fig. 3), welches durch Kaschieren aus die Schichten 7.1 - 7.3 bildenden Folien unter Verwendung von Zwischenschichten aus Haftvermittler oder Kleber hergestellt ist (Schnittdarstellung der Figur 4). Das Ausgangs- oder Flachmaterial 8 wird beispielsweise von einer Vorratsrolle abgezogen und durch Einrollen um die Bahnlängsrichtung und durch Verbinden der beiden Längsseiten 8.1 des Flachmaterials 8 entlang einer Verbindungs- oder Schweißnaht 9 zu einem schlauchartiger Formkörper 10 geformt (Fig. 5).

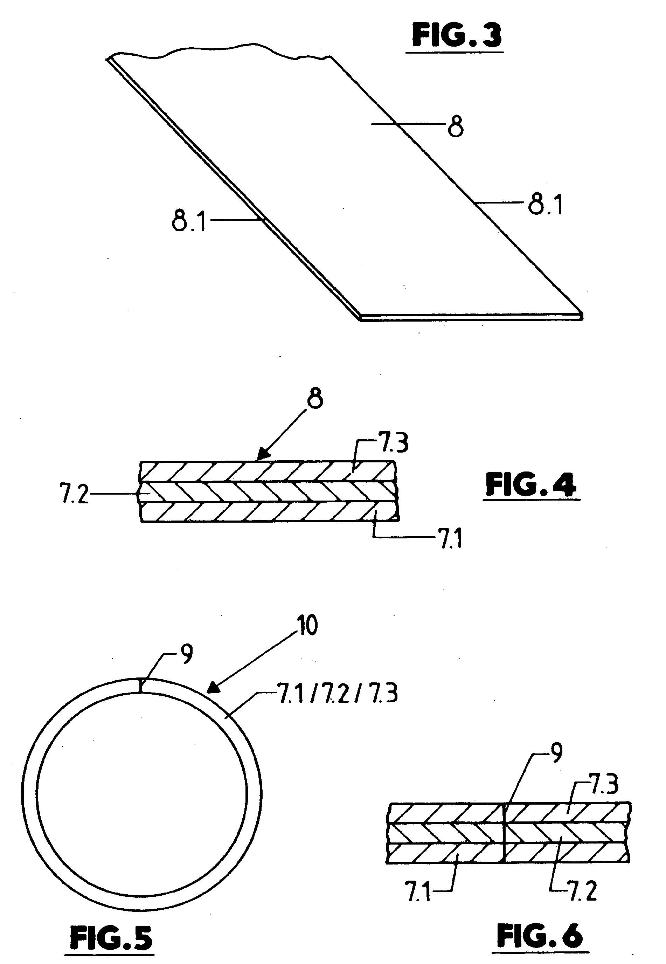

Das Verbinden an der Verbindungs- oder Schweißnaht 9 erfolgt entsprechend der Darstellung der Figur 6 durch Stumpfverschweißen in der Weise, dass zumindest jede aus Kunststoff bestehende Schicht, d.h. beispielsweise die Schichten 7.1 und 7.3 an den Längsrändern 8.1 des zu dem schlauchartigen Formkörper 10 geformten Flachmaterials 8 jeweils mit sich selbst stumpf verbunden sind, also die Verbindungs- oder Schweißnaht 9 von einer stumpfen Verbindung, nicht von einer überlappenden Verbindung gebildet ist. Weiterhin liegen die Randbereiche einer aus einem metallischen Material, beispielsweise aus Aluminium bestehenden Schicht, z.B. die Randbereiche der Schicht 7.2 an der Verbindungs- oder Schweißnaht 9 zumindest stumpf gegeneinander an.

Durch die stumpfe Verbindung der Längsränder 8.1 des Flachmaterials 8 an der Verbindungs- oder Schweißnaht 9 wird u.a. erreicht, dass die mit der Schichtfolge bzw. dem Folienverbund angestrebte Wirkung, beispielsweise die Sperrwirkung der Schicht 7.2, auch an der Verbindungs- oder Schweißnaht 9 aufrecht erhalten ist und sich durch Vermeidung einer überlappenden Verbindung auch ein ansprechendes äußeres Erscheinungsbild für die Tube 1 bzw. den Tubenkörper 5 ergibt. Insbesondere besteht die Möglichkeit, die Ausstattung bzw. Dekoration des Tubenkörpers 5 durchgehend und unterbrechungsfrei auch im Bereich der Verbindungs- oder Schweißnaht 9 auszuführen, beispielsweise so, dass diese Verbindungs- oder Schweißnaht nicht oder nur sehr reduziert optisch in Erscheinung tritt bzw. sichtbar ist. Ein weiterer entscheidender Vorteil der durch Stumpfverschweißen hergestellten Verbindungs- oder Schweißnaht 9 besteht darin, dass die Materialien für die einzelnen Schichten 7.1 - 7.3 den jeweiligen Anforderungen entsprechend beliebig gewählt werden können, da jede Schicht mit sich selbst an der Verbindungs- oder Schweißnaht 9 verbunden wird, also bei für die Schichten 7.1 - 7.3 verwendeten unterschiedlichen Materialien nicht darauf geachtet werden muss, ob und ggs. in welcher Form unterschiedliche Materialien miteinander verbunden werden können. So ermöglicht es, die Verbindung durch Stumpfschweißen beispielsweise für die innere Schicht 7.1 PP und für die Schicht 7.3 PE zu verwenden, also Kunststoffe, die miteinander nicht oder aber nur mit einem erheblichen Aufwand, beispielsweise durch Verwendung weiterer Zwischenschichten miteinander verschweißbar sind.

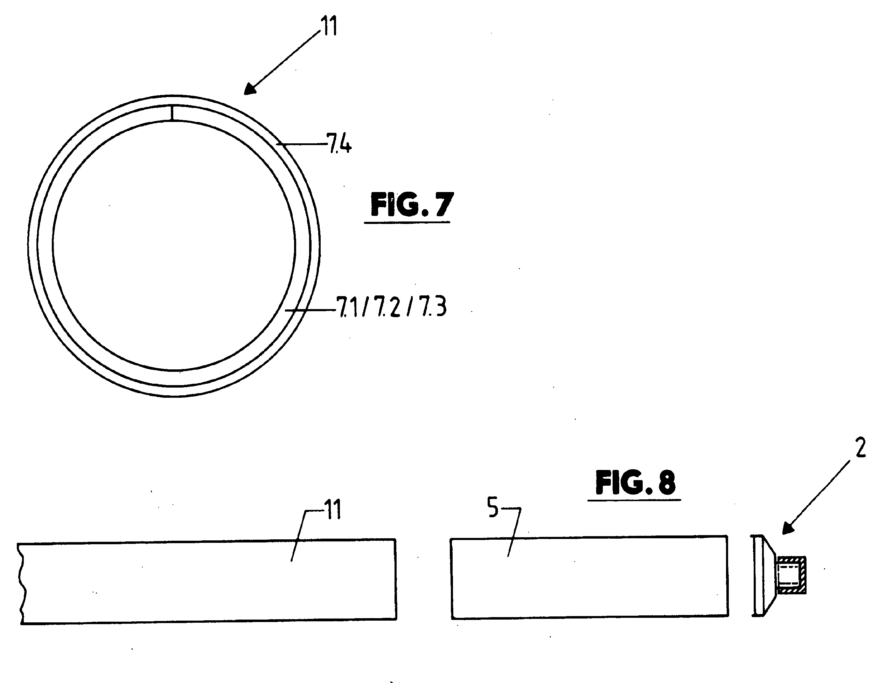

Der Formkörper 10 wird entsprechend der Figur 7 in einem weiteren Verfahrensschritt mit der äußeren Schicht 7.4 ummantelt, und zwar derart, dass die Schicht 7.4 den Formkörper 10 auf seinem gesamten Umfang umschließt und damit eine Art Ringanker um den Formkörper 10 bildet. Durch die Schicht 7.4 wird die durch Stumpfschweißen erzeugte Verbindungs- oder Schweißnaht 9 zusätzlich gesichert und entlastet, sodass diese Verbindungs- oder Schweißnaht auch extremen mechanischen Belastungen standhält, die beispielsweise bei Verwendung der mit einem Produkt gefüllten Tube 1 beim manuellen Ausdrücken des Produktes aus der Tubenöffnung 4 und/oder beim Biegen oder Einrollen des Tubenkörpers 5 auftreten können.

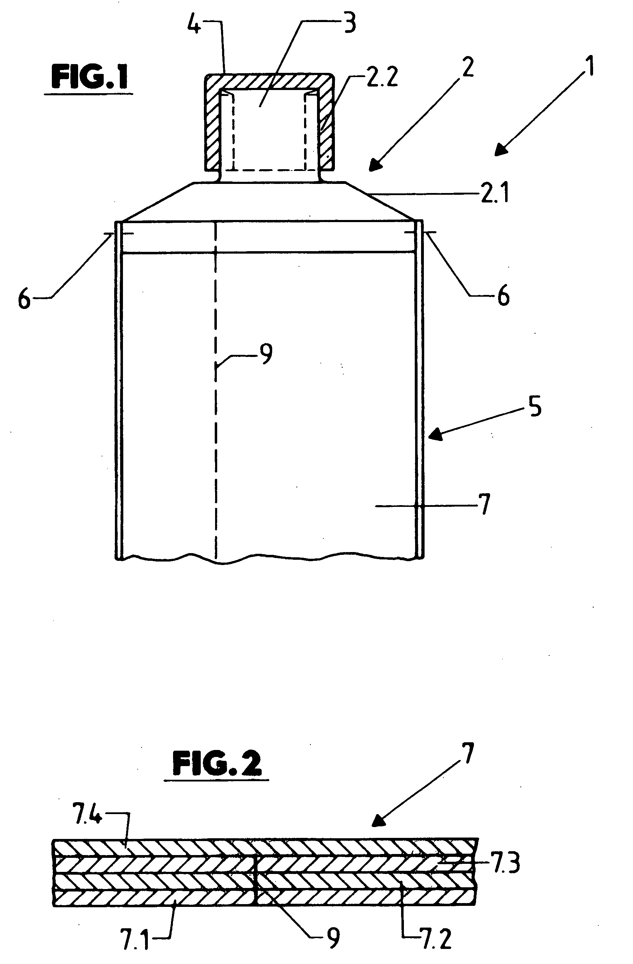

Aus dem mit der Schicht 7.4 versehenen schlauchartigen Formkörper 11, dessen Wandung dann die in der Figur 2 wiedergegebene Schichtfolge der Schichten 7.1 - 7.4 aufweist, wird jeweils durch Abtrennen der Tubenkörper 5 erzeugt, der an einem Ende mit dem mit der Verschlusskappe 4 vormontierten Tubenelement 2 verbunden und verschlossen wird. Das andere Ende des Tubenkörpers 5 wird in bekannter Weise nach dem Füllen der Tube 1 mit dem Produkt durch Verschweißen oder Verkleben verschlossen.

Die Schicht 7.4 wird beispielsweise durch Überextrudieren erzeugt, d.h. dadurch, dass diese Schicht auf den schlauchartigen Formkörper 10 aufextrudiert wird. Um die erforderliche Verbindung zwischen den Schichten 7.3 und 7.4 zu erreichen, sind die Materialien dieser Schichten entsprechend aufeinander abgestimmt, d.h. beide Schichten bestehen beispielsweise aus PE.

Grundsätzlich besteht auch die Möglichkeit, dass die Schicht 7.4 aus mehreren Einzelschichten, beispielsweise aus wenigstens zwei Einzelschichten besteht, die dann nacheinander oder aber zeitgleich durch Extrudieren auf den Formkörper 10 aufgebracht werden. Hierbei besteht insbesondere die Möglichkeit einer Zwischenschicht zwischen der Schicht 7.3 und der außenliegenden Teilschicht der Schicht 7.4, wobei diese Zwischenschicht dann z.B. als Haftvermittler zwischen den aus unterschiedlichen Materialien bestehenden Schichten dient.

Für die Ausstattung der Tube 1 ist beispielsweise das Ausgangs- oder Flachmaterial 8 bereits entsprechend bedruckt, wobei die Schicht 7.4 dann aus einem transparenten Kunststoff besteht und mit möglichst geringer Dicke auf den Formkörper 10 aufgebracht wird.

Weiterhin besteht grundsätzlich auch die Möglichkeit, den Formkörper 10 an seiner Außenfläche mit einer Ausstattung zu versehen, beispielsweise durch Bedrucken und/oder durch Aufbringen einer dünnen, beispielsweise transparenten und hinterdruckten Folie, die dann beispielsweise in einem Thermoprozess, d.h. durch Erhitzen, oder aber in einem Kaltprozess, beispielsweise unter Verwendung eines Haftvermittlers oder Klebers auf den Formkörper 10 vorgesehen wird. Für die Schicht 7.4 wird bei diesem Verfahren wiederum ein transparentes Kunststoffmaterial verwendet.

Weiterhin besteht die Möglichkeit, den Formkörper 11 und/oder die aus dem Formkörper durch Abtrennen erzeugten Tubenkörper 5 an der Außenfläche mit einer Ausstattung zu versehen, und zwar beispielsweise wiederum durch Bedrucken, durch Aufbringen einer die Ausstattung aufweisenden, beispielsweise hinterdruckten dünnen Folie oder Trägerbahn usw. Selbstverständlich können die vorgenannten Maßnahmen zur Erzeugung der Tubenausstattung auch in beliebiger Weise kombiniert werden.

Vorstehend wurde davon ausgegangen, dass die Schicht 7.4 oder aber mehrere diese Schicht bildende Teilschichten durch Extrudieren auf den Formkörper 10 aufgebracht werden. Auch andere Methoden zur Erzeugung der außenliegenden Schicht 7.4 und/oder deren Teilschichten sind denkbar. So ist es beispielsweise möglich, den Formkörper 10 mit wenigstens einer, die Schicht 7.4 bildenden Folie zu umwickeln, und zwar z.B. unter Verwendung eines Haftvermittlers, der diese Folie mit der Schicht 7.3 des Formkörpers 10 verbindet. Auch bei diesem Verfahren umschließt die durch Aufwickeln erzeugte Schicht 7.4 den Formkörper 10 auf seinen gesamten Umfang und wirkt wiederum als "Ringanker" für eine zuverlässige Sicherung und Entlastung der Verbindungs- oder Schweißnaht 9 und zur Aufnahme von auf die Längsnaht 9 einwirkenden Kräften.

Bei der Herstellung der Schicht 7.4 durch Umwickeln besteht die Möglichkeit, dass die verwendete Folie bereits zumindest mit einem Teil der endgültigen Tubenausstattung versehen ist, beispielsweise eine transparente, hinterdruckte Folie ist. Weiterhin besteht bei dieser Ausführung auch die Möglichkeit, dass nach dem Aufbringen der Schicht 7.4 durch Umwickeln des Formkörpers 10 auf die Schicht 7.4 mit einer weiteren, dünnen Schicht, beispielsweise aus einem transparenten Kunststoffmaterial überextrudiert wird.

Unabhängig davon, auf welche Weise die außenliegende Schicht 7.4 erzeugt wird, ist diese Schicht durch entsprechende Materialwahl und/oder durch entsprechende Wahl der Verfahrensweise bevorzugt so erzeugt, dass sie eine gewisse Ringspannung auf die darunter liegende Schichtfolge der Schichten 7.1 - 7.3 radial nach innen ausübt, wodurch die Entlastung der Verbindungs- oder Schweißnaht 9 durch die außenliegende Schicht 7.4 noch weiter verbessert wird.

Die Erfindung wurde voranstehend an Ausführungsbeispielen beschrieben. Es versteht sich, dass zahlreiche weitere Änderungen und Abwandlungen möglich sind, ohne dass dadurch der der Erfindung zugrundeliegende Erfindungsgedanke verlassen wird.

So kann die Anzahl der Schichten 7.1 - 7.4 auch unterschiedlich von der beschriebenen Anzahl sein. Im Extremfall kann das Ausgangs- oder Flachmaterial 8 einschichtig ausgeführt sein oder aber aus nur zwei Schichten bestehen, beispielsweise aus einer die Innenfläche des Tubenkörpers 5 bildenden Schicht aus einem produktneutralen Material, beispielsweise aus Kunststoff oder aus einem metallischen Werkstoff, z.B. Aluminium, und aus einer weiteren Schicht aus Kunststoff. Die Verbindung der Längsränder 8.1 des streifenförmigen Ausgangsmaterials 8 erfolgt wiederum durch Stumpfverschweißen insbesondere der Schicht aus Kunststoff. Nach dem Herstellen des schlauchartigen Formkörpers wird dieser dann wiederum mit der den Formkörper auf seinem gesamten Umfang schließenden äußeren Schicht durch Überextrudieren und/oder Umwickeln versehen.

### Bezugszeichenliste

- 1: Tube
- 2: Tubenelement
- 2.1: Tubenschulter
- 2.2: Tubennippel
- 3: Tubenöffnung
- 4: Verschlusskappe
- 5: Tubenkörper
- 6: Verbindungs- oder Schweißnaht zwischen Tubenelement 2 und Tubenkörper 5
- 7: Tubenkörperwandung
- 7.1 - 7.4: Schicht
- 8: streifenförmiges Ausgangs- oder Flachmaterial
- 9: Längsnaht
- 10, 11: schlauchartiger Formkörper

## Patentansprüche

1. Verfahren zum Herstellen von Packmitteln, mit jeweils einem schlauchartigen Packmittelkörper (5), wobei aus einem Flachmaterial (8) mit zwei einander abgewandten Längsseiten (8.1) durch Falten oder Rollen und durch anschließendes Verbinden der Längsseiten (8.1) in Form einer stumpfen Verbindung durch Stumpfverschweißen ein schlauchförmiger Formkörper (10) gebildet wird, wobei das als Ausgangsmaterial verwendete Flachmaterial (8) wenigstens zwei Schichten (7.1 - 7.3) aufweist, wobei beim Verbinden der Längsseiten (8.1) jede Schicht jeweils mit sich selbst verbunden wird, wobei der Formkörper (10) an seiner Außenfläche mit wenigstens einer ihn auf dem gesamten Umfang durchgängig umschließenden äußeren Schicht (7.4) versehen wird, und dass die wenigstens eine den Formkörper (10) auf seinem gesamten Umfang umschließende äußere Schicht (7.4) durch Extrudieren aufgebracht wird.

2. Verfahren nach Anspruch 1, **dadurch gekennzeichnet, dass** das Packmittel eine Tube (1) und der Packmittelkörper der Tubenkörper (5) der Tube sind.

3. Verfahren nach einem der Ansprüche 1 oder 2, **dadurch gekennzeichnet, dass** das Flachmaterial (8) wenigstens eine Kunststoffschicht (7.1, 7.3) und zumindest eine Sperrschicht (7.2) aus einem metallischen Werkstoff oder aus Kunststoff aufweist.

4. Verfahren nach einem der vorhergehenden Ansprüche **gekennzeichnet durch** Verwendung eines Ausgangs- oder Flachmaterials (8) mit wenigstens einer die Innenfläche oder eine Zwischenschicht des Packmittelkörpers (5) bildenden Funktionsschicht aus Kunststoff oder einem metallischen Werkstoff.

5. Verfahren nach einem der vorhergehenden Ansprüche, **gekennzeichnet durch** die Verwendung eines Ausgangs- oder Flachmaterials (8), welches an seiner der Innenfläche des Packmittelkörpers (5) abgewandten Außenfläche mit einer grafischen und/oder farblichen Ausstattung versehen ist, wobei für die wenigstens eine äußere Schicht (4.7) ein transparentes Material verwendet wird.

6. Verfahren nach einem der vorhergehenden Ansprüche, **dadurch gekennzeichnet, dass** der Formkörper (10) nach seiner Herstellung zumindest mit einem Teil der optischen Ausstattung oder Dekoration des Packmittels versehen wird.

7. Verfahren nach einem der vorhergehenden Ansprüche, **dadurch gekennzeichnet, dass** der schlauchartige Formkörper (10) und/oder die durch Abtrennen aus dem Formkörper (10) gebildeten Packmittelkörper (5) nach dem Aufbringen der wenigstens einen äußeren Schicht (7.4) auf der Außenseite dieser Schicht mit wenigstens einem Teil der Ausstattung oder Dekoration des Packmittels versehen werden.

8. Verfahren nach einem der vorhergehenden Ansprüche, **dadurch gekennzeichnet, dass** die wenigstens eine äußere Schicht (7.4) derart aufgebracht wird, dass sie eine Ringspannung auf den von ihr umschlossenen Formkörper (10) ausübt.

9. Verfahren nach einem der vorhergehenden Ansprüche, **gekennzeichnet durch** die Verwendung eines Ausgangs- oder Flachmaterials (8), welches wenigstens drei Schichten (7.1 - 7.3) aufweist, von denen eine erste Schicht die Innenfläche des Packmittelkörpers (5) bildet und diese Schicht sowie wenigstens eine weitere Schicht (7.3) aus Kunststoff bestehen, und dass eine zwischen der ersten Schicht (7.1) und der weiteren Schicht (7.3) angeordnete Schicht (7.2) als Sperrschicht aus einem metallischen Material oder aus einem als Sperrschicht geeigneten Kunststoff besteht.

10. Verfahren nach einem der vorhergehenden Ansprüche, **dadurch gekennzeichnet, dass** die erste Schicht (7.1) aus PP oder PE und die weitere Schicht (7.3) aus einem Kunststoffmaterial besteht, welches dem Kunststoffmaterial der äußeren, den Formkörper (10) umschließenden Schicht (7.4) entspricht.

11. Verfahren nach einem der vorhergehenden Ansprüche, **gekennzeichnet durch** die Verwendung von wenigstens einer Zwischenschicht aus Kleber oder Haftvermittler zum Verbinden der wenigstens zwei Schichten (7.1 - 7.3) des Ausgangsmaterials und/oder zum Verbinden der wenigstens einen äußeren Schicht (7.4) mit dem Formkörper (10).

## Claims

1. A method for the manufacture of packagings, in each case with a tubular packaging body (5), wherein a tubular moulded body (10) is formed from a flat material (8) with two longitudinal sides (8.1) facing away from one another by means of folding or rolling and by means of subsequent joining of the longitudinal sides (8.1) in the form of a butt joint by means of butt welding, wherein the flat material (8) used as the source material has at least two layers (7.1 - 7.3), wherein in the joining of the longitudinal sides (8.1) each layer is joined with itself in each case, wherein on its outer surface the moulded body (10) is provided with at least one outer layer (7.4) surrounding the moulded body (10) continuously over the whole periphery, and the at least one outer layer (7.4) surrounding the moulded body (10) continuously over its whole periphery is applied by means of extrusion.

2. The method according to claim 1, **characterised in that**, the packaging is a tube (1), and the packaging body is the tube body (5) of the tube.

3. The method according to one of the claims 1 or 2, **characterised in that**, the flat material (8) has at least one plastic layer (7.1, 7.3) and at least one barrier layer (7.2) of a metallic material, or of a plastic.

4. The method according to one of the preceding claims, **characterised by** the use of a source material or flat material (8) with at least one functional layer of plastic or a metallic material forming the inner surface or an intermediate layer of the packaging body (5).

5. The method according to one of the preceding claims, **characterised by** the use of a source material or flat material (8), which on its outer surface, facing away from the inner surface of the packaging body (5), is provided with a graphic and/or coloured feature, wherein a transparent material is used for the at least one outer layer (4.7).

6. The method according to one of the preceding claims, **characterised in that**, after its manufacture the moulded body (10) is provided with at least a part of the visual feature or decoration of the packaging.

7. The method according to one of the preceding claims, **characterised in that**, the tubular moulded body (10), and/or the packaging body (5) formed by parting from the moulded body (10) after the application of the at least one outer layer (7.4), are provided on the outer face of this layer with at least a part of the feature or decoration of the packaging.

8. The method according to one of the preceding claims, **characterised in that**, the at least one outer layer (7.4) is applied such that it exerts a hoop stress onto the moulded body (10) that is surrounded by the former.

9. The method according to one of the preceding claims, **characterised by** the use of a source material or flat material (8), which has at least three layers (7.1 - 7.3), of which a first layer forms the inner surface of the packaging body (5), and this layer, together with at least one further layer (7.3), consist of plastic, and that a layer (7.2) arranged between the first layer (7.1) and the other layer (7.3) as a barrier layer consists of a metallic material, or of a plastic that is suitable as a barrier layer.

10. The method according to one of the preceding claims, **characterised in that**, the first layer (7.1) consists of PP or PE and the other layer (7.3) consists of a plastic material, which corresponds to the plastic material of the outer layer (7.4) surrounding the moulded body (10).

11. The method according to one of the preceding claims, **characterised by** the use of at least one intermediate layer of an adhesive or a bonding agent for purposes of joining the at least two layers (7.1 - 7.3) of the source material, and/or for purposes of joining the at least one outer layer (7.4) with the moulded body (10).

## Revendications

1. Procédé de fabrication d'emballages (5) comportant respectivement un corps d'emballage de type tubulaire, dans lequel un corps moulé tubulaire (10) est constitué dans un matériau plat (8) avec deux cotés longitudinaux (8.1) détournés l'un de l'autre par pliage ou roulage et par raccordement consécutif des cotés longitudinaux (8.1) sous forme de connexion bout à bout par soudage bout à bout, le matériau plat (8) utilisé comme matériau initial présentant au moins deux couches (7.1 - 7.3), sachant que, lors de la connexion des cotés longitudinaux (8.1), chaque couche est respectivement raccordée à elle-même, le corps moulé (10) étant pourvu sur sa surface extérieure d'au moins une couche extérieure (7.4) l'entourant en continu sur toute sa circonférence, et la couche extérieure (7.4) entourant l'au moins un corps moulé (10) sur toute sa circonférence étant appliquée par extrusion.

2. Procédé selon la revendication 1, **caractérisé en ce que** l'emballage est un tube (1) et le corps de l'emballage le corps tubulaire (5) du tube.

3. Procédé selon une des revendications 1 ou 2, **caractérisé en ce que** le matériau plat (8) présente au moins une couche de plastique (7.1, 7.3) et au moins une couche de barrage (7.2) en matériau métallique ou en plastique.

4. Procédé selon une des revendications précédentes, **caractérisé par** l'utilisation d'un matériau initial ou plat (8) comportant au moins une couche fonctionnelle formant la surface intérieure ou une couche intermédiaire du corps de l'emballage (5) en plastique ou en matériau métallique.

5. Procédé selon une des revendications précédentes, **caractérisé par** l'utilisation d'un matériau initial ou plat (8) qui est pourvu sur sa surface extérieure détournée de la surface intérieure de l'emballage (5) d'un équipement graphique et/ou coloré, un matériau transparent étant utilisé pour l'au moins une couche extérieure (4.7).

6. Procédé selon une des revendications précédentes, **caractérisé en ce que** le corps moulé (10) est pourvu après sa fabrication d'au moins une partie de l'équipement optique ou de la décoration de l'emballage.

7. Procédé selon une des revendications précédentes, **caractérisé en ce que** le corps moulé de forme tubulaire (10) et/ou les corps d'emballage (5) formés par séparation du corps moulé (10) sont pourvus, après l'application de l'au moins une couche extérieure (7.4) sur la face extérieure de cette couche, d'au moins une partie de l'équipement ou de la décoration de l'emballage.

8. Procédé selon une des revendications précédentes, **caractérisé en ce que** l'au moins une couche extérieure (7.4) est appliquée de manière à ce qu'elle exerce une tension annulaire sur le corps moulé (10) qu'elle entoure.

9. Procédé selon une des revendications précédentes, **caractérisé par** l'utilisation d'un matériau initial ou plat (8) qui présente au moins trois couches (7.1 - 7.3) dont une première couche constitue la surface intérieure du corps de l'emballage (5) et que cette couche et au moins une autre couche (7.3) sont composées de plastique et qu'une couche (7.2) disposée entre la première couche (7.1) et l'autre couche (7.3) est composée en tant que couche de barrage d'un matériau métallique ou d'un plastique apte à servir de couche de barrage.

10. Procédé selon une des revendications précédentes, **caractérisé en ce que** la première couche (7.1) est composée de PP ou PE et que l'autre couche (7.3) est composée de matière plastique qui équivaut à la matière plastique de la couche extérieure (7.4) entourant le corps moulé (10).

11. Procédé selon une des revendications précédentes, **caractérisé par** l'utilisation d'au moins une couche intermédiaire de colle ou de promoteur d'adhérence pour relier les au moins deux couches (7.1 - 7.3) de matériau initial et/ou pour relier l'au moins une couche extérieure (7.4) au corps moulé (10).
